# EUROPEAN PATENT APPLICATION

(11) **EP 3 905 590 A1**
(43) Date of publication of application: **03.11.2021**
(21) Application number: 19905178.0
(22) Date of filing: 26.12.2019
(51) Int. Cl.: H04L 12/24

(54) **SYSTEM AND METHOD FOR OBTAINING NETWORK TOPOLOGY, AND SERVER**

(30) Priority: 26.12.2018 CN 201811598855
(71) Applicant: ZTE Corporation, Shenzhen, Guangdong 518057 (CN)
(72) Inventor: WANG, Shichao, Shenzhen, Guangdong 518057 (CN); DING, Jie, Shenzhen, Guangdong 518057 (CN); CUI, Pisuo, Shenzhen, Guangdong 518057 (CN)
(74) Representative: Ipsilon
(86) International application number: PCT/CN2019/128659
(87) International publication number: WO 2020/135575

(57) **Abstract**

The present disclosure provides a system and a method for obtaining a network topology, and a server. The method includes: obtaining topology information of a virtual network inside a server, topology information between the server and a network device, and topology information between network devices; and manufacturing a network topology according to any one or any combination of the following obtained topology information: topology information of the virtual network inside the server, topology information between the server and the network device, and complete topology information between the network devices.

## Description

### TECHNICAL FIELD

The present disclosure relates to, but is not limited to, computer network technology, and particularly relates to a system and method for obtaining a network topology, and a server.

### BACKGROUND

With the continuous development of network technology and cloud computing, more and more physical network devices, physical servers, virtual network devices, and virtual machines appear in data centers. In order to better position network problems, Link Layer Discovery Protocol (LLDP), Cisco Discovery Protocol (CDP), and Simple Network Management Protocol (SNMP) are used in the related art to obtain network topology information.

The LLDP protocol is an IEEE802.1AB standard that specifies that a device periodically sends an LLDP message, carrying information such as configuration information, device capability, a system name and description, and a port name and description, to a peripheral device, and at the same time, receives and processes an LLDP message from a neighbor device. The CDP protocol and the LLDP protocol function similarly, but the CDP protocol is a proprietary protocol that is more lightweight than the LLDP protocol, and that can carry proprietary information. The SNMP protocol employs the transmission control protocol/internet protocol (TCP/IP) family to manage network devices on the internet, and provides a set of basic operations for monitoring and maintaining network devices.

In one solution, only a network topology between physical devices or only a network topology of a virtual network inside a server is obtained during the process of obtaining a network topology; only a connection relationship between a virtual machine and a virtual switch (OVS, Open vSwitch) is obtained during the process of obtaining a topology of a virtual network inside a server; and a third party library, libpcap, is used for development when an LLDP message is processed. This solution reduces the versatility.

### SUMMARY

The present disclosure provides a system and method for obtaining a network topology, and a server, which can obtain complete network topology information.

In an embodiment of the present disclosure, there is provided a system for obtaining a network topology, including: a server as a control node and at least one server as a compute node. The control node includes: a first obtaining unit, a client module and a management module, where the first obtaining unit is configured to obtain any one or any combination of the following topology information: topology information of a virtual network inside the server where the first obtaining unit is located, topology information between the server where the first obtaining unit is located and a network device, and topology information between network devices; and the client module is configured to obtain corresponding topology information from the first obtaining unit in the server where the client module is located according to a call from the management module; and the management module is configured to manufacture a network topology according to the obtained topology information. The compute node includes: a second obtaining unit and a client module, where the second obtaining unit is configured to obtain any one or any combination of the following topology information: topology information of a virtual network inside the server where the second obtaining unit is located; topology information between the server where the second obtaining unit is located and a network device; and the client module is configured to obtain corresponding topology information from the second obtaining unit in the server where the client module is located according to a call from the control node, and output the topology information to the control node.

In an embodiment of the present disclosure, there is further provided a server, including: an obtaining module and a client module, where the obtaining module is configured to obtain topology information of a virtual network inside the server where the obtaining module is located, and /or obtain topology information between the server where the obtaining module is located and a network device; and the client module is configured to obtain corresponding topology information from the obtaining module according to a call from a management module.

In an exemplary implementation, the obtaining module includes a first obtaining module and a second obtaining module, where the first obtaining module is configured to obtain topology information of a virtual network inside the server where the first obtaining module is located; and the second obtaining module is configured to obtain topology information between the server where the second obtaining module is located and a network device.

In an exemplary implementation, the server further includes: a management module, and the obtaining module further includes: a third obtaining module, where the third obtaining module is configured to obtain topology information between network devices; and the management module is configured to manufacture a network topology according to the obtained topology information.

In an embodiment of the present disclosure, there is further provided a method for obtaining a network topology, including: obtaining topology information of a virtual network inside a server, topology information between the server and a network device, and topology information between network devices; and manufacturing a network topology according to any one or any combination of the following obtained topology information: topology information of the virtual network inside the server, topology information between the server and the network device, and topology information between the network devices.

In an embodiment of the present disclosure, there is further provided a computer readable storage medium having a computer executable instruction stored thereon which, when executed by a processor, causes the method for obtaining the network topology according to the above embodiment to be implemented.

In an embodiment of the present disclosure, there is further provided an electronic device for obtaining a network topology, including a processor and a memory, where the memory has stored thereon a computer program operable on the processor, and when executed by the processor, the computer program causes the method for obtaining the network topology according to the above embodiment to be implemented.

Other features and advantages of the disclosure will be set forth in the description which follows, and will become apparent from the description at least partially, or be understood by implementing the disclosure. Objects and other advantages of the disclosure may be realized and obtained by means of the structures particularly pointed out in the description, appended claims and drawings.

### BRIEF DESCRIPTION OF THE DRAWINGS

Accompanying drawings are provided for further understanding of the technical solution of the disclosure and constitute a part of the specification. Hereinafter, these drawings are intended to explain the technical solution of the disclosure together with the following implementations, but should not be considered as a limitation to the technical solution of the disclosure.
FIG. 1 is a schematic diagram of a system for obtaining a network topology according to the present disclosure;
FIG. 2 is a schematic diagram showing a complete network topology map obtained by a virtual data center with the system for obtaining a network topology according to the present disclosure;
FIG. 3 is a schematic diagram of a first obtaining module in a system for obtaining a network topology according to the present disclosure;
FIG. 4 is a schematic diagram of a second obtaining module in a system for obtaining a network topology according to the present disclosure;
FIG. 5 is a schematic diagram of a third obtaining module in a system for obtaining a network topology according to the present disclosure;
FIG. 6 is a schematic diagram of a management module in a system for obtaining a network topology according to the present disclosure;
FIG. 7 is a schematic diagram of a client module in a system for obtaining a network topology according to the present disclosure;
FIG. 8 is a schematic flowchart of a method for obtaining a network topology according to the present disclosure;
FIG. 9 is a schematic diagram of a method for obtaining a network topology according to the present disclosure;
FIG. 10 is a schematic diagram of a topology output according to the present disclosure;
FIG. 11 is a schematic flowchart of a method for obtaining a network topology according to the present disclosure;
FIG. 12 is a schematic diagram of a topology output according to the present disclosure;
FIG. 13 is a schematic flowchart of a method for obtaining a network topology according to the present disclosure;
FIG. 14 is a schematic diagram of a topology output according to the present disclosure;
FIG. 15 is a schematic flowchart of a method for obtaining a network topology according to the present disclosure;
FIG. 16 is a schematic flowchart of a method for obtaining a network topology according to the present disclosure;
FIG. 17 is a schematic diagram of a topology output according to the present disclosure; and
FIG. 18 is a schematic flowchart of a method for obtaining a network topology according to the present disclosure.

### DETAILED DESCRIPTION

For clarity and better understanding of the objects, technical solutions and advantages of the disclosure, embodiments of the disclosure will be described in detail in conjunction with the accompanying drawings. It should be noted that the embodiments of the disclosure and features herein may be combined with each other in any manner, as long as they are not contradictory.

The sending and receiving of the LLDP and CDP messages are completed over network devices, but for security purposes, the network devices are not allowed to log in. In this case, in order to obtain a complete network topology, it is found that, in a data center environment, connection conditions with the network devices can be observed on the server, and therefore, by learning conditions of the network devices connected with a network card of the server, a network problem can be positioned more effectively. In addition, the present disclosure also utilizes SNMP to obtain a connection relationship between network devices, ensuring that a complete network topology of the data center can be plotted.

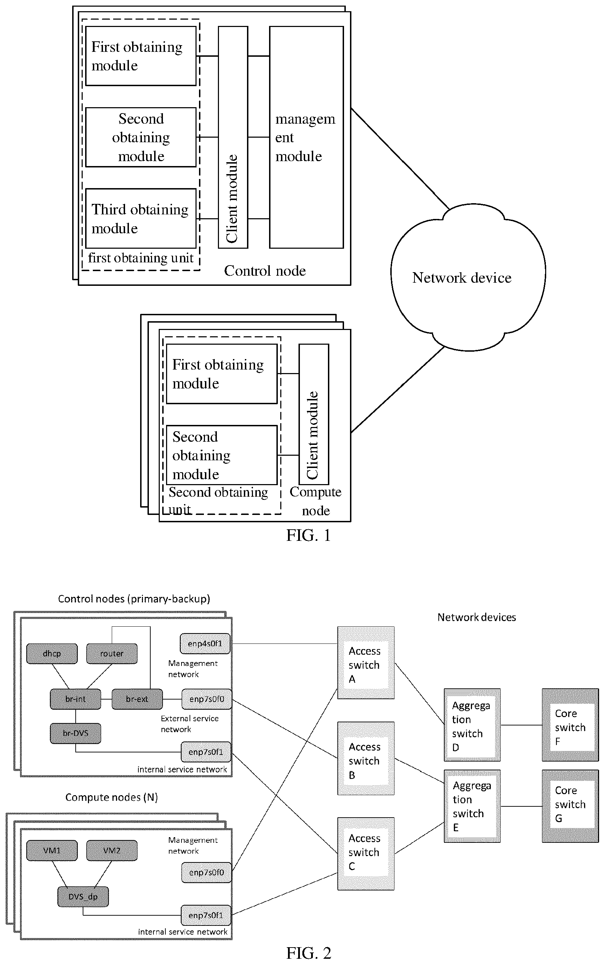

FIG. 1 is a schematic diagram showing components of a system for obtaining a network topology according to the present disclosure. As shown in FIG. 1, the system includes at least: a server as a control node, and at least one server as a compute node.

The control node includes: a first obtaining unit, a client module and a management module, where
the first obtaining unit is configured to obtain any one or any combination of the following topology information: topology information of a virtual network inside the server where the first obtaining unit is located, topology information between the server where the first obtaining unit is located and a network device, and topology information between network devices; and
the client module is configured to obtain corresponding topology information from the first obtaining unit in the server where the client module is located according to a call from the management module; and
the management module is configured to manufacture a network topology according to the obtained topology information.

In an exemplary implementation, the first obtaining unit may include: a first obtaining module, a second obtaining module, and a third obtaining module, where
the first obtaining module is configured to obtain topology information of the virtual network inside the server where the first obtaining module is located; and
the second obtaining module is configured to obtain topology information between the server where the second obtaining module is located and the network device; and
the third obtaining module is configured to obtain topology information between the network devices.

The compute node includes: a second obtaining unit and a client module, where
the second obtaining unit is configured to obtain any one or any combination of the following topology information: topology information of a virtual network inside the server where the second obtaining unit is located, and topology information between the server where the second obtaining unit is located and a network device; and
the client module is configured to obtain corresponding topology information from the second obtaining unit in the compute node where the client module is located according to a call from the control node, and output the topology information to the control node.

In an exemplary implementation, the second obtaining unit may include: a first obtaining module and a second obtaining module, where
the first obtaining module is configured to obtain topology information of a virtual network inside the server where the first obtaining module is located; and
the second obtaining module is configured to obtain topology information between the server where the second obtaining module is located and a network device.

In an exemplary implementation, the client module is further configured to: obtain corresponding topology information from each unit/module for obtaining topology information in the server where the client module is located according to a call from a user. More specifically, for the client module located on the server as the control node, it is specifically configured to: obtain corresponding topology information from the first obtaining unit of the control node where the client module is located according to a request from a user so that the user who initiates the request obtains a network topology of the server. For the client module located on the server as the compute node, it is specifically configured to: obtain corresponding topology information from the second obtaining unit of the compute node where the client module is located according to a request from a user so that the user who initiates the request obtains a network topology of the server.

In an exemplary implementation, the topology information of the virtual network inside the server includes: topology information between a virtual machine and a virtual network device inside the server, and topology information between virtual network devices inside the server.

In an exemplary implementation, the topology information between the server and the network device includes: topology information between each network card of a physical server and the network device.

In an exemplary implementation, the topology information between the network devices includes: topology information between physical network devices.

In an exemplary implementation, as shown in FIG. 1, there may be two or more control nodes, which are respectively configured as a primary control node and one or more backup control nodes.

The primary and backup control nodes may work in a primary-backup mode in which when a primary device has serious operation abnormality, for example, some important modules or a large number of modules are in an INACTIVE state, a switching from the primary control node to the backup control node is triggered.

FIG. 2 is a schematic diagram showing a complete network topology map obtained by a virtual data center of the disclosure with a system for obtaining a network topology according to the present disclosure. As shown in FIG. 2, from right to left, the following are shown in sequence: a network topology of network devices, including, for example, connection conditions between switches at various levels; a connection relationship between server network cards and network devices, including, for example, connection conditions between respective physical network cards and network devices on the server, fields such as enp4s0f1 and enp7s0f0 in FIG. 2 representing names of the physical network cards; and , a topology of a virtual network inside the server, including, for example, a connection relationship between a virtual switch and a virtual router, a connection relationship between a virtual switch and a Dynamic Host Configuration Protocol (DHCP) server, a connection relationship between a virtual switch and a virtual machine, and the like.

With the system for obtaining the network topology according to the present disclosure, not only the network topology between the physical devices, but also the network topology of the virtual network inside the server, are obtained during the process of obtaining the network topology; and moreover, not only the connection relationship between the virtual machine and the virtual switch, but also the connection relationship between the virtual network device and the virtual switch, are obtained during the process of obtaining the topology of the virtual network inside the server. That is, the complete network topology information is obtained by the system for obtaining the network topology according to the present disclosure.

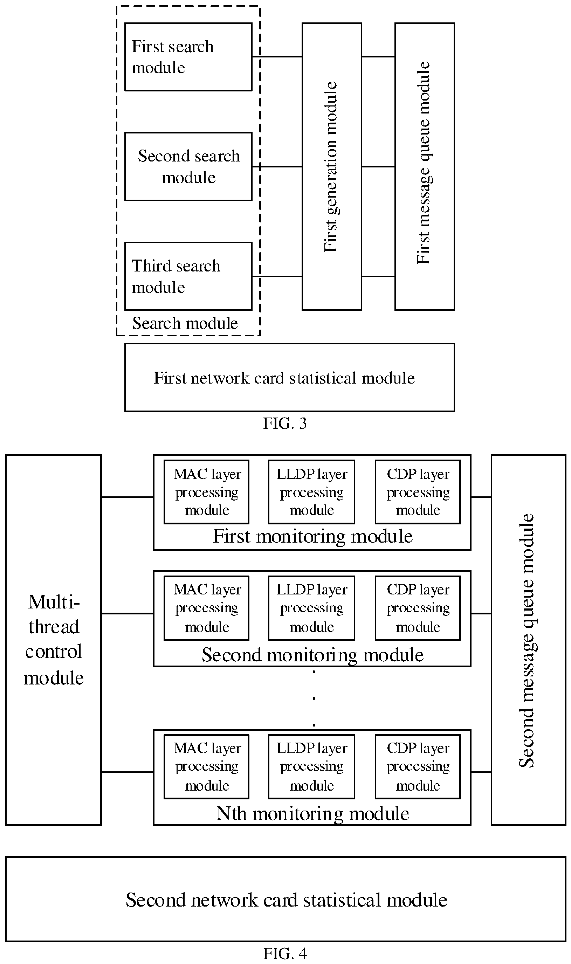

FIG. 3 is a schematic diagram of a first obtaining module in a system for obtaining a network topology according to the present disclosure. As shown in FIG. 3, the first obtaining module includes at least: a first network card statistical module, a search module, a first generation module and a first message queue module, where
the first network card statistical module is configured to collect network card related information of all current physical network cards in the server where the first network card statistical module is located, and provide information for recording a connection relationship between the physical network cards and ports of a switch;
the search module is configured to search an OVS database for description information of a relationship between a bridge and a port, search a virtual network card name in a virtual machine, and call a Neutron API to search a Neutron database for information of a virtual network device;
the first generation module is configured to form a topology of a virtual network inside the server based on information from the search module; and
the first message queue module is configured to implement interprocess communication.

In an exemplary implementation, the search module may include: a first search module configured to search the OVS database for description information of the relationship between the bridge and the port; a second search module configured to search the virtual network card name in the virtual machine; and a third search module configured to call the Neutron API to search the Neutron database for information of the virtual network device. In such case, the first generation module is configured to: obtain a connection relationship between the virtual machine and the OVS bridge according to information from the first search module and the second search module; obtain a connection relationship between the virtual network device and the OVS bridge according to information from the first search module and the third search module, where the virtual network device includes, but is not limited to, a dhcp namespace, a vRouter, etc.

In an exemplary implementation, system commands of linux may be used to obtain network card related information, such as names, statuses, and the like, of all the physical network cards on all physical hosts.

In an exemplary implementation, the first obtaining module further includes: a first log module (not shown in FIG. 3) configured to record critical events of the server where the first log module is located, so as to facilitate positioning of problems.

In an exemplary implementation, the first obtaining module further includes: a first daemon module (not shown in FIG. 3) configured to convert a general process into a daemon process. In this manner, the server side stably runs in the background.

In an exemplary implementation, the first obtaining module further includes: a first format conversion module (not shown in FIG. 3) configured to convert information required to be transmitted from the server side into a designated data format, such as JSON or the like, before outputting.

FIG. 4 is a schematic diagram of a second obtaining module in a system for obtaining a network topology according to the present disclosure. As shown in FIG. 4, the second obtaining module includes at least: a second network card statistical module, a multi-thread control module, at least one monitoring module (such as the first, second, ..., the N^{th} monitoring modules shown in FIG. 4), and a second message queue module, where
the second network card statistical module is configured to collect network card related information of all current physical network cards in the server where the second network card statistical module is located;
the multi-thread control module is configured to generate and synchronize multiple threads; and
each monitoring module is configured to process messages received by each network card respectively.

In some implementations, the multi-thread control module is specifically configured to: start a thread for each network card, which thread is configured to monitor all messages sent to the network card and filter out LLDP and CDP messages; and set a protective synchronization policy for the multiple threads so that critical data structures can be read or written by only one thread at a time.

In an exemplary implementation, since at most two threads will compete for the same data structure, for example, a thread of the network card monitoring module competes with a main thread of the server side, synchronization among the multiple threads may be implemented by a mutual exclusion lock.

In some implementations, each monitoring module includes: a Media Access Control (MAC) layer processing module, an LLDP layer processing module and a CDP layer processing module. The MAC layer processing module is configured to analyze and process an MAC header. In an exemplary implementation, the analyzing and processing for an Ethernet header may encounter two types of Ethernet protocols: Ethernet_II and 802.3_Ethernet, in which case the protocol type is automatically identified and the processing is performed accordingly. The LLDP layer processing module is configured to analyze and process an LLDP message header and a Token/Length/Value (TLV) field.

In an exemplary implementation, various types of TLV data are processed, and the result is recorded in an LLDP_Interface_Port data structure which represents mapping information, parsed by LLDP, between network cards and ports. The LLDP_Interface_Port data structure is defined as:

```
     typedef struct LLDP_Interface_Port {
     char interface_name[SIZE_NIC_NAME];
     char chassis_subtype[SIZE_MIDDLE];
     char port_subtype[SIZE_SMALL];
     char time_to_live[SIZE_SMALL];
     char port_description[SIZE_LARGE];
     char system_name[SIZE_MIDDLE];
     char system_description[SIZE_LARGE];
     }lldp_interface_port;
```

where interface_name represents a name of a network card; chassis_subtype generally represents an MAC address of a network device; port_subtype represents a type of a port; time_to_live represents a value of time to live; port_description represents port description; system_name represents a name of the system in which the network device connected to the network card is located; and system_description represents description of the system in which the network device connected to the network card is located.

Here, different array lengths are used for different types of information to reduce unnecessary space overhead. For example, SIZE_LARGE indicates 100 bytes, SIZE_MIDDLE indicates 50 bytes, and SIZE_SMALL and SIZE_NIC_NAME indicate 20 bytes.

In an exemplary implementation, during processing of an LLDP message, a more underlying system is used to call sockets for development, which improves the universality of the system for obtaining a network topology according to the present disclosure.

The CDP layer processing module is configured to analyze and process a CDP message header and a TLV field. In an exemplary implementation, various types of TLV data are processed, and the result is recorded in a CDP_Interface_Port data structure which represents mapping information, parsed by CDP, between network cards and ports. The CDP_Interface_Port data structure is defined as:

```
     typedef struct CDP_Interface_Port {
     char interface_name[SIZE_NIC_NAME];
     char device_id[SIZE_MIDDLE];
     char ip_address[SIZE_MIDDLE];
     char time_to_live[SIZE_SMALL];
     char port_id[SIZE_MIDDLE];
     char capabilities[SIZE_MIDDLE];
     char software_version[SIZE_LARGE];
     char platform[SIZE_LARGE];
     char native_vlan[SIZE_SMALL];
     }cdp_interface_port;
```

where interface_name represents a name of a network card; device_id represents an ID of a network device; ip_address represents a management IP of a network device; time_to_live represents a value of time to live; port_id represents an ID of a port; capabilities represents functions supported by the network device; software_version represents the version of software of the network device; platform represents a platform used by the network device; and native_vlan represents a local VLAN.

The CDP layer processing module, mainly used for dealing with switches of some data centers, supports transmission of only CDP messages but not LLDP messages.

The second message queue module is configured to implement interprocess communication. All data packets reaching the network card are monitored in the background in a daemon mode, and contents of the LLDP and the CDP messages are analyzed and recorded in a corresponding data structure for a client to request.

In an exemplary implementation, system commands of linux may be used to obtain network card related information, such as names, statuses, and the like, of all the physical network cards on all physical hosts.

In an exemplary implementation, the second obtaining module further includes: a second log module (not shown in FIG. 4) configured to record critical events of the server where the second log module is located, so as to facilitate positioning of problems.

In an exemplary implementation, the second obtaining module further includes: a second daemon module (not shown in FIG. 4) configured to convert a general process into a daemon process. In this manner, the server side stably runs in the background.

In an exemplary implementation, the second obtaining module further includes: a second format conversion module (not shown in FIG. 4) configured to convert information required to be transmitted from the server side into a designated data format, such as JSON or the like, before outputting.

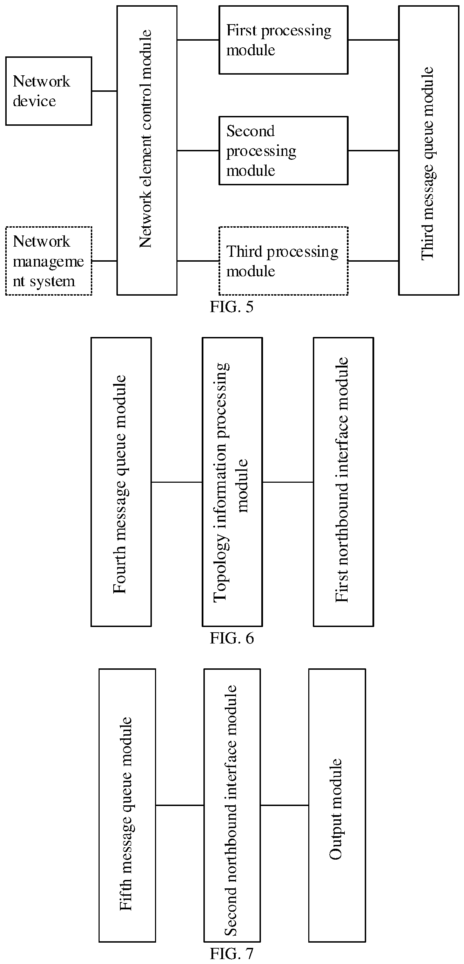

FIG. 5 is a schematic diagram of a third obtaining module in a system for obtaining a network topology according to the present disclosure. As shown in FIG. 5, the third obtaining module includes at least: a network element control module, a processing module and a third message queue module, where
the network element control module is configured to manage and enable communication with a network device;
the processing module is configured to process data related to SNMP, including data directly sent from a network device; and process network topology data from a Software Defined Network (SDN) controller.

In an exemplary implementation, the second processing module may be an SDN controller proxy module that obtains network topology information known to the SDN controller through communication with the SDN controller.

The third message queue module is configured to implement interprocess communication. The third message queue module can enable cross-host communication.

In an exemplary implementation, the processing module may include: a first processing module and a second processing module, where
a first processing module is configured to process data related to SNMP, including data directly sent from a network device; and
the second processing module is configured to process network topology data from an SDN controller. In an exemplary implementation, the second processing module may be an SDN controller proxy module that obtains network topology information known to the SDN controller through communication with the SDN controller.

In some implementations, if a network management system is further included in the system, the processing module is further configured to: process network topology data from the network management system; and accordingly, the network element control module is further configured to: manage and enable communication with the network management system.

In an exemplary implementation, the third obtaining module further includes: a third log module (not shown in FIG. 5) configured to record critical events of the server where the third log module is located, so as to facilitate positioning of problems.

In an exemplary implementation, the third obtaining module further includes: a third daemon module (not shown in FIG. 5) configured to convert a general process into a daemon process. In this manner, the server side stably runs in the background.

In an exemplary implementation, the third obtaining module further includes: a third format conversion module (not shown in FIG. 5) configured to convert information required to be transmitted from the server side into a designated data format, such as JSON or the like, before outputting.

FIG. 6 is a schematic diagram of a management module in a system for obtaining a network topology according to the present disclosure. As shown in FIG. 6, the management module includes at least: a fourth message queue module and a topology information processing module.

The fourth message queue module is configured to implement interprocess communication, and call a northbound interface of the client module in the server to obtain topology information from the first, second, and third obtaining modules. That is, the fourth message queue module can obtain topology information of a virtual network inside a server, topology information between the server and a network device, and topology information between network devices.

The topology information processing module is configured to integrate the collected topology information to manufacture a network topology.

In some implementations, the management module further includes: a first northbound interface module configured to be called by a user, e.g., a cloud platform, and obtain the network topology according to the call by the user.

In an exemplary implemetation, the management module further includes: a fourth log module (not shown in FIG. 6) configured to record critical events of the server where the fourth log module is located, so as to facilitate positioning of problems.

In an exemplary implementation, the management module further includes: a fourth daemon module (not shown in FIG. 6) configured to convert a general process into a daemon process. In this manner, the server side stably runs in the background.

In an exemplary implementation, the management module further includes: a fourth format conversion module (not shown in FIG. 6) configured to convert information required to be transmitted from the server side into a designated data format, such as JSON or the like, before outputting.

FIG. 7 is a schematic diagram of a client module in a system for obtaining a network topology according to the present disclosure. As shown in FIG. 7, the client module includes at least: a fifth message queue module, a second northbound interface module, and an output module, where
the fifth message queue module is configured to implement interprocess communication, and monitor data of the server, in which the fifth message queue module is located, in background in a daemon mode;
the second northbound interface module is configured to obtain corresponding topology information from the first obtaining module, and/or the second obtaining module, and/or the third obtaining module of the control node where the second northbound interface module is located according to a call from the management module of the control node; or, obtain corresponding topology information from the first obtaining module and/or the second obtaining module of the compute node where the second northbound interface module is located, and output the topology information to the control node;
the output module is configured to output the obtained topology information to the control node or the client initiating the request.

In an exemplary implementation, the northbound interface module is further configured to: obtain corresponding topology information from each module for obtaining topology information in the server where the northbound interface module is located according to a call from a user, and output the topology information via the output module.

The present disclosure further provides a server, including: an obtaining module and a client module, where
the obtaining module is configured to obtain topology information of a virtual network inside the server where the obtaining module is located, and/or obtain topology information between the server where the obtaining module is located and a network device; and
the client module is configured to obtain corresponding topology information from the obtaining module according to a call from a management module.

In an exemplary implementation, the obtaining module includes a first obtaining module and a second obtaining module, where
the first obtaining module is configured to obtain topology information of the virtual network inside the server where the first obtaining module is located; and
the second obtaining module is configured to obtain topology information between the server where the second obtaining module is located and the network device.

In an exemplary implementation, the server further includes: a management module, and the obtaining module further includes: a third obtaining module, where
the third obtaining module is configured to obtain topology information between network devices; and
the management module is configured to manufacture a network topology according to the obtained topology information.

In an exemplary implementation, the client module is further configured to:
obtain corresponding topology information from the obtaining module according to a request from a user so that the user who initiates the request obtains a network topology of the server.

For the specific implementation of each module in the server, reference may be made to the above description, which is not repeated herein.

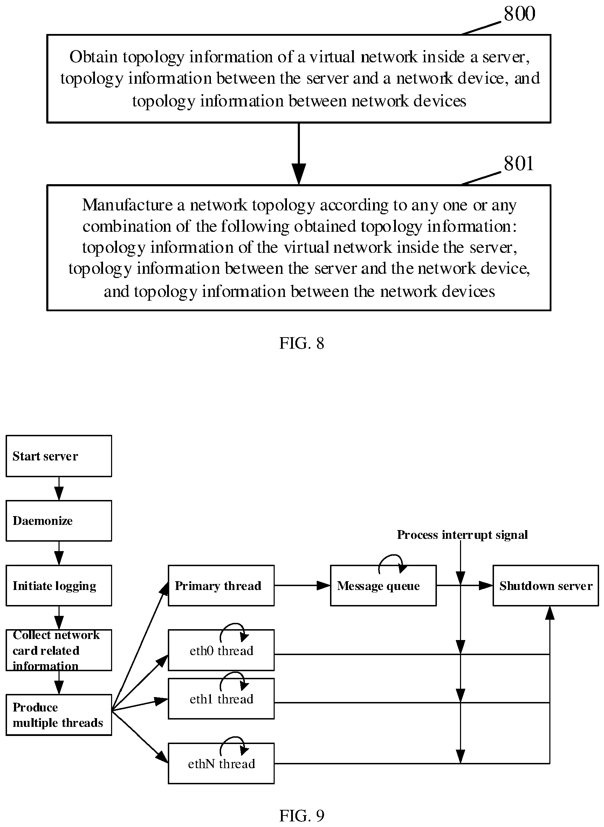

FIG. 8 is a schematic flowchart of a method for obtaining a network topology according to the present disclosure. As shown in FIG. 8, the method includes the following steps 800 and 801.

At step 800: topology information of a virtual network inside a server, topology information between the server and a network device, and topology information between network devices are obtained.

In an exemplary implementation, the topology information of the virtual network inside the server includes: topology information between a virtual machine and a virtual network device inside the server, and topology information between virtual network devices inside the server.

In an exemplary implementation, the topology information between the server and the network device includes: topology information between each network card of a physical server and the network device.

In an exemplary implementation, the topology information between the network devices includes: topology information between physical network devices.

In some implementations, the obtaining topology information of the virtual network inside the server includes: collecting network card related information of all current physical network cards in the server; searching an OVS database for description information of a relationship between a bridge and a port, searching a virtual network card name in a virtual machine, and calling a Neutron API to search a Neutron database for information of a virtual network device; and forming a topology of the virtual network inside the server based on the obtained information.

In an exemplary implementation, the forming the topology of the virtual network inside the server based on the obtained information includes:
obtaining a connection relationship between a virtual machine and an OVS bridge according to the description information of the relationship between the bridge and the port and the virtual network card name of the virtual machine; and obtaining a connection relationship between a virtual network device and an OVS bridge according to the description information of the relationship between the bridge and the port and the information of the virtual network device. The virtual network device includes, but is not limited to, a dhcp namespace, a vRouter, etc.

In some implementations, the obtaining topology information between the server and the network device includes: collecting network card related information, such as names, statuses, or the like, of all current physical network cards in the server, and starting a thread for each network card, which thread is configured to monitor all messages sent to the network card and filter out LLDP and CDP messages; and processing messages received by each network card respectively.

In an exemplary implementation, system commands of linux may be used to obtain network card related information, such as names, statuses, and the like, of all the physical network cards on all physical hosts.

In an exemplary implementation, the processing messages received by each network card includes: analyzing and processing an MAC header, and in an exemplary implementation, the analyzing and processing for an Ethernet header may encounter two types of Ethernet protocols: Ethernet_II and 802.3_Ethernet, in which case the protocol type is automatically identified and the processing is performed accordingly; and analyzing and processing an LLDP message header and a TLV field. In an exemplary implementation, various types of TLV data are processed, and the result is recorded in an LLDP_Interface_Port data structure; and a CDP message header and a TLV field are analyzed and processed.

In an exemplary implementation, various types of TLV data are processed, and the result is recorded in a CDP_Interface_Port data structure.

In some implementations, during processing of an LLDP message, a more underlying system is used to call sockets for development, which improves the universality of the system for obtaining the network topology according to the present disclosure.

In some implementations, the obtaining topology information between the network devices includes: processing data related to SNMP, including data directly sent from a network device; and processing network topology data from an SDN controller.

At step 801: a network topology is manufactured according to any one or any combination of the following obtained topology information: topology information of the virtual network inside the server, topology information between the server and the network device, and topology information between the network devices.

In some implementations, a complete network topology is manufactured.

In an exemplary implementation, the method for obtaining the network topology according to the present disclosure further includes: outputting, according to a request from a user, the obtained topology information to a client of the user initiating the request.

In an embodiment of the present disclosure, there is further provided a computer readable storage medium having a computer executable instruction stored thereon which, causes the method for obtaining the network topology according to the above embodiment to be implemented.

In an embodiment of the present disclosure, there is further provided an electronic device for obtaining a network topology, including a processor and a memory, where the memory has stored thereon a computer program operable on the processor to: cause the method for obtaining the network topology according to the above embodiment to be implemented.

The method for obtaining the network topology according to the present disclosure will be described in detail below with reference to specific implementations.

FIG. 9 is a schematic diagram of a first example of the method for obtaining the network topology according to the present disclosure. As shown in FIG. 9, in the first example, a detailed description will be given by taking an example of obtaining a connection relationship topology between a server network card and a network device port.

Firstly, a server-side program is started and runs in a daemon mode. It should be noted that if a corresponding process is running, the process should be deleted first, and then restarted. Logging is initiated. The recorded log includes critical events in the server, such as: whether a problem exists in the subsequent multi-thread establishing process, whether an LLDP message or a CDP message is received, an MAC address of the device sending the LLDP message, abnormal conditions during running of the logging program, and so on. Information of all physical network cards on the current host is collected, and the corresponding network card names are recorded in a preset LLDP_Interface_Port data structure or CDP_Interface_Port data structure.

Then, a thread is started for each physical network card to monitor LLDP and CDP messages sent to the thread. The method for monitoring may use original sockets to capture all messages reaching the designated network card, and filtering out LLDP and CDP messages according to the characteristics of the L2 frame. Referring to FIG. 4, after the message reaches the designated network card, the MAC layer processing module is firstly called to parse the received message. If the received message is determined to be an LLDP message after parsing, the LLDP layer processing module is called to perform corresponding processing; and if the received message is determined to be a CDP message after parsing, the CDP layer processing module is called to perform corresponding processing. If the received message is neither an LLDP message nor a CDP message, processing is skipped here, i.e., no processing is performed on the received message.

Afterwards, all TLV fields are parsed according to the protocol corresponding to the message, and the related result is recorded in an LLDP_Interface_Port data structure or a CDP_Interface_Port data structure accordingly. In an implementation, in order to ensure that only one thread is modifying at the server side, or that another thread cannot read while one thread is modifying, a mutual exclusion lock is adopted to solve the synchronization problem of multiple threads.

Finally, a message queue is initiated in preparation for processing a request from the client. In an implementation, when returning the result to the client initiating the request, it means returning the data in the LLDP _Interface_Port data structure or the CDP_Interface_Port data structure in a designated format, such as JSON, so to facilitate the processing by the client.

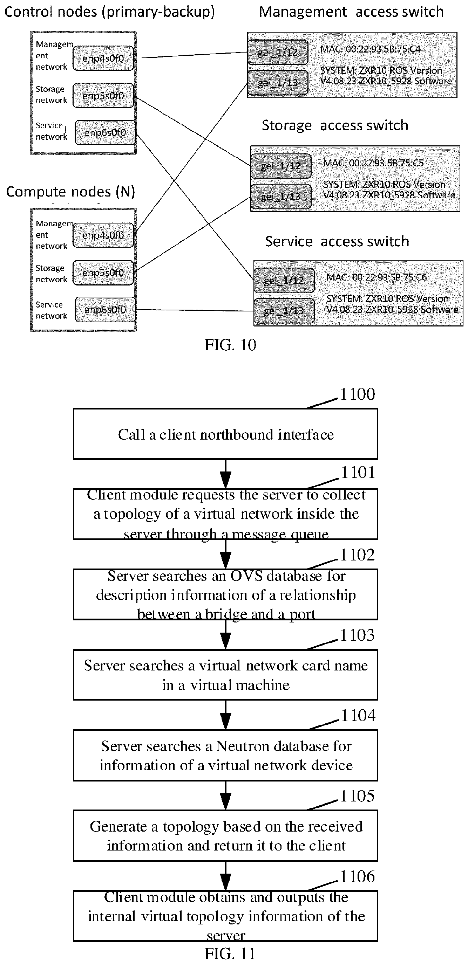

FIG. 10 shows a schematic diagram of a topology output according to the first example. As shown in FIG. 10, enp4s0f0, enp5s0f0, enp6s0f0 and similar fields represent names of physical network cards, gei-1/12, gei-1/13, and similar fields represent port names of network devices, MAC: 00: 22: 93: 5B: 75: C4 and similar fields represent bridge MAC addresses of switches, and SYSTEM: ZXR10 ROS Version V4.08.23 ZXR10_5928 Software and similar fields represent names and versions of switch systems. Based on the obtained topology, network card configuration problems of the server and port configuration problems of the switch can be positioned.

FIG. 11 is a schematic flowchart of a second example of the method for obtaining the network topology according to the present disclosure. In the second example, as shown in FIG. 11, a detailed description will be given by taking an example of triggering a client module on a general server to obtain a topology of a virtual network inside a local server.

At step 1100: a client module is triggered to start by calling a client northbound interface.

At step 1101: the client module learns that the target is to obtain an internal virtual topology of the server according to the parameters for calling the client northbound interface, and requests, through a message queue, the server to collect a topology of a virtual network inside the server.

At step 1102: the server searches an OVS database for description information of a relationship between a bridge and a port.

At step 1103: the server searches a virtual network card name in a virtual machine.

At step 1104: the server searches a Neutron database for information of a virtual network device.

It should be noted that there is no strict sequence among steps 1102, 1103 and 1104. That is, the sequence of the steps 1102, 1103 and 1104 may be adjusted arbitrarily, and is not intended to limit the scope of the present disclosure.

At step 1105: a topology is generated based on the information collected in steps 1102 to 1104, and returned to the client.

At step 1106: the client module obtains and outputs the internal virtual topology information of the server.

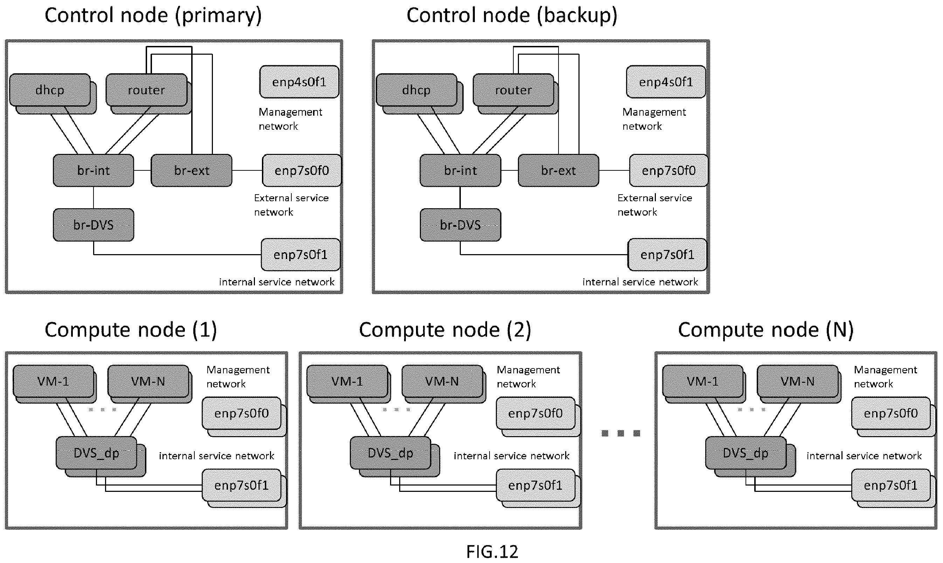

FIG. 12 shows a schematic diagram of a topology output according to the second example. As shown in FIG. 12, enp4s0f1, enp7s0f0, enp7s0f1 and similar fields represent names of physical network cards, br-int, DVS_dp and similar fields represent names of virtual switches, and VM-1 and similar fields represent names of virtual machines. Based on the obtained topology, configuration problems in the virtual network can be positioned conveniently. The topology obtained according to the second example is of a type different from that of the topology obtained according to the first example.

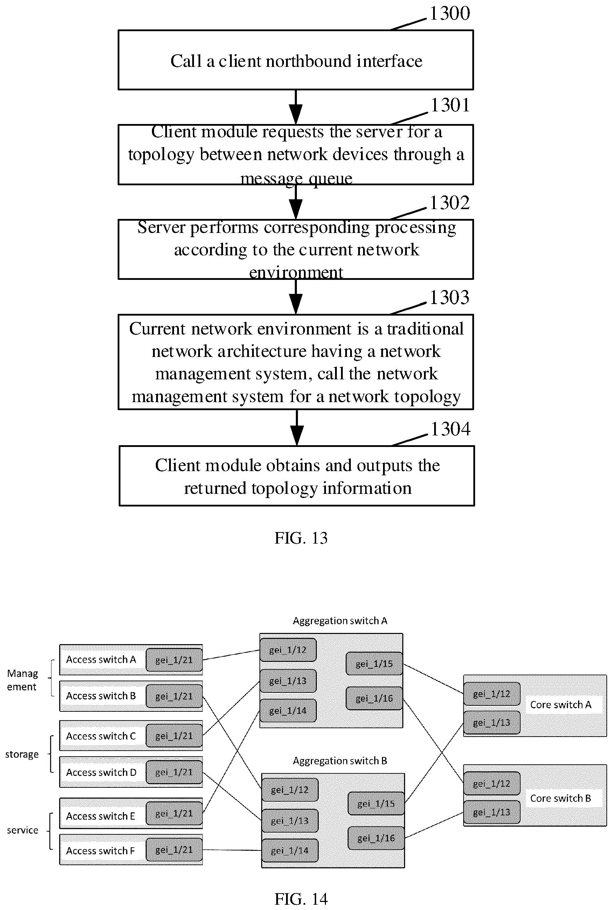

FIG. 13 is a schematic flowchart of a third example of the method for obtaining the network topology according to the present disclosure. In the third example, explanation will be given by taking the example of triggering the client module on the control node to obtain the topology between the network devices. Assuming that the current virtual data center adopts a traditional network architecture and has a network management system, as shown in FIG. 13, the method includes the following steps 1300 to 1304.

At step 1300: a client module is triggered to start by calling a client northbound interface.

At step 1301: the client module requests, the server to collect a topology between network devices through a message queue.

At step 1302: the server performs corresponding processing according to the current network environment, that is, determines to call a corresponding module to obtain the topology between the network devices according to the current network environment.

At step 1303: since the current network environment in this example is a traditional network architecture having a network management system, a processing module (e.g., the second processing module in FIG. 5) corresponding to the network management system is called to request the network management system for a network topology.

At step 1304: a topology between the network devices is obtained and then fed back to the client module, and the client module obtains and outputs network topology information between the network devices.

FIG. 14 is a schematic diagram of a topology output according to third and fourth examples of the present disclosure. As shown in FIG. 14, gei-1/12, gei-1/13, gei-1/14, gei-1/15, gei-1/16, gei-1/21 and similar fields are port names of physical switches. Based on the obtained topology, connection and configuration problems between the network devices can be positioned conveniently. The topology obtained according to the third example is of a type different from that of topologies obtained according to the first and second examples.

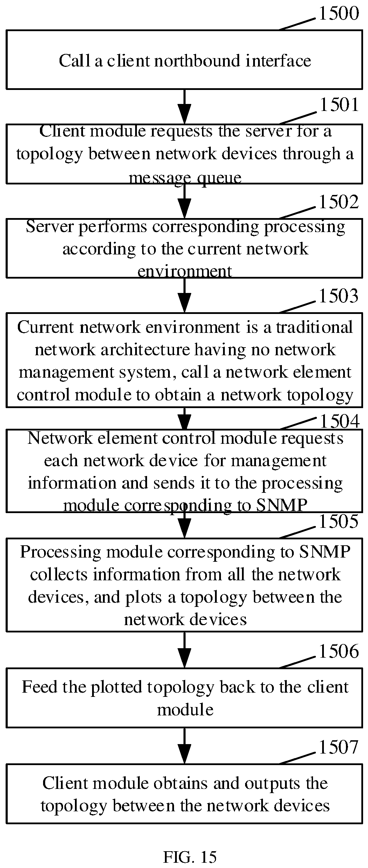

FIG. 15 is a schematic flowchart of a fourth example of the method for obtaining the network topology according to the present disclosure. In the fourth example, explanation will be given by taking the example of triggering the client module on the control node to obtain the topology between the network devices. Assuming that the current virtual data center adopts a traditional network architecture and has no network management system, as shown in FIG 15, the method includes the following steps 1500 to 1507.

At step 1500: a client module is triggered to start by calling a client northbound interface.

At step 1501: the client module requests the server to collect a topology between network devices through a message queue.

At step 1502: the server performs corresponding processing according to the current network environment, that is, determines to call a corresponding module to obtain the topology between the network devices according to the current network environment.

At step 1503: since the current network environment in this example is a traditional network architecture having no network management system, an SNMP request is sent to an SNMP proxy of each network device by calling the network element control module as shown in FIG. 5, so as to obtain management information from each network device.

At step 1504: after receiving a reply from each network device, the network element control module sends the obtained result to the processing module (e.g., the first processing module in FIG. 5) corresponding to SNMP.

At step 1505: the processing module corresponding to SNMP collects the results from all the network devices, and, plots, for example, using a BFS algorithm, a complete topology between the network devices.

At step 1506: the plotted topology is fed back to the client module.

At step 1507: the client module obtains and outputs the network topology between the network devices.

FIG. 14 shows the output topology obtained according to the example. In this manner, based on the obtained topology, connection and configuration problems between the network devices can be positioned conveniently. The network scenario of the fourth example is different from that of the third example.

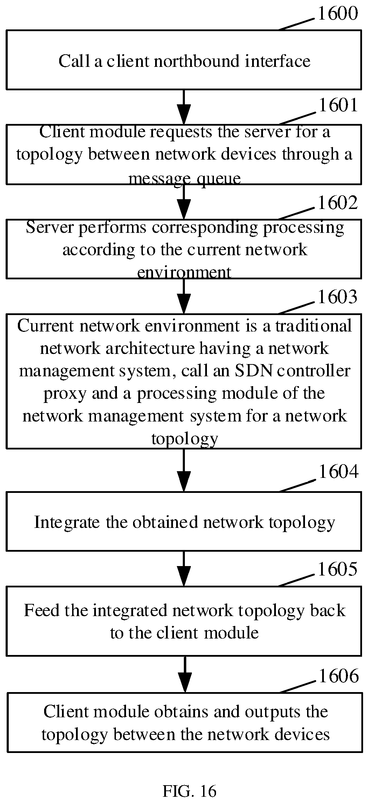

FIG. 16 is a schematic flowchart of a fifth example of the method for obtaining the network topology according to the present disclosure. In the fifth example, explanation will be given by taking the example of triggering the client module on the control node to obtain the topology between the network devices. Assuming that the current virtual data center adopts an SDN network architecture and has a network management system, as shown in FIG. 16, the method includes the following steps 1600 to 1606.

At step 1600: a client module is triggered to start by calling a client northbound interface.

At step 1601: the client module requests the server to collect a topology between network devices through a message queue.

At step 1602: the server performs corresponding processing according to the current network environment, that is, determines to call a corresponding module to obtain the topology between the network devices according to the current network environment.

At step 1603: since the current network environment is a traditional network architecture having a network management system, and a database of the SDN controller has a topology between the network devices, an SDN controller proxy module (e.g., the third processing module in FIG. 5) is called to request the SDN controller for an overlay network topology; and a processing module of the network management system is called to request the network management system for an underlay network topology.

At step 1604: the overlay network topology and the underlay network topology are presented as one topology.

At step 1605: the topology merging the overlay network and the underlay network is fed back to the client module.

At step 1606: the client module obtains and outputs network topology information between the network devices.

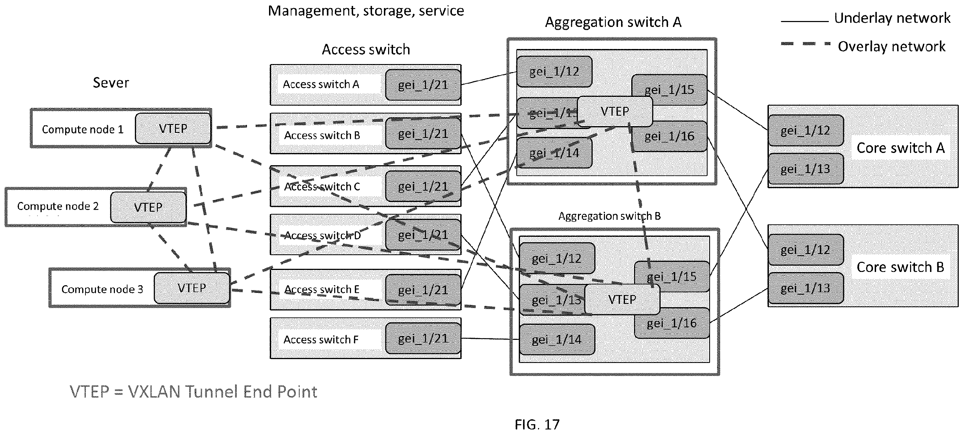

FIG. 17 is a schematic diagram of a topology output according to fifth and sixth examples of the present disclosure. As shown in FIG. 17, the solid connecting line represents an underlay network, and the dotted connecting line represents an overlay network. The gei-1/12, gei-1/13, gei-1/14, gei-1/15, gei-1/16, gei-1/21 and similar fields are port names of physical switches; and Vxlan Tunnel End Point (VTEP) is used for encapsulation and de-encapsulation of the VXLAN message. Based on the obtained topology, connection and configuration problems between the network devices can be positioned conveniently. These examples have network architectures different from those of the third and fourth examples. The word "overlay", literally, means an upper layer, or at a service layer or a user layer; while opposite to "overlay", "underlay", literally means a lower layer, or an infrastructure layer, a conventional IP network dedicated to carrying user traffic, as long as forwarding of IP packets can be provided.

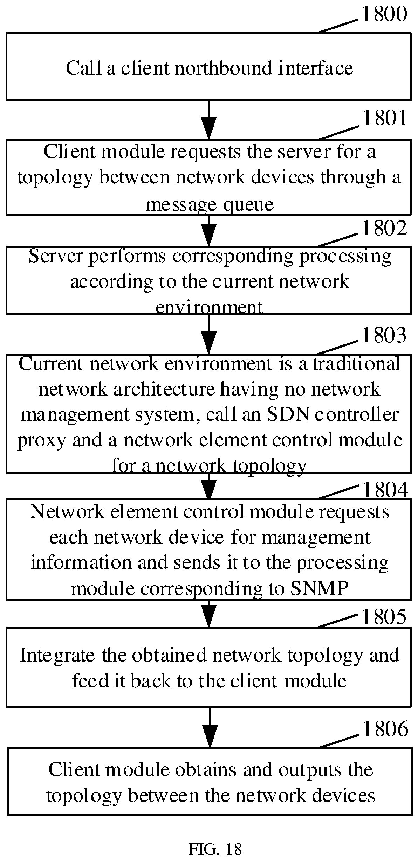

FIG. 18 is a schematic flowchart of a sixth example of the method for obtaining the network topology according to the present disclosure. In the sixth example, explanation will be given by taking the example of triggering the client module on the control node to obtain the topology between the network devices. Assuming that the current virtual data center adopts an SDN network architecture and has no network management system, as shown in FIG. 18, the method includes the following steps 1800 to 1806.

At step 1800: a client module is triggered to start by calling a client northbound interface.

At step 1801: the client module requests the server to collect a topology between network devices through a message queue.

At step 1802: the server performs corresponding processing according to the current network environment, that is, determines to call a corresponding module to obtain the topology between the network devices according to the current network environment.

At step 1803: since the current network environment is a traditional network architecture having no network management system, a database of the SDN controller has a topology between the network devices, an SDN controller proxy module (e.g., the third processing module in FIG. 5) is called to request the SDN controller for an overlay network topology; since there is no network management system, an SNMP request is sent to an SNMP proxy of each network device by calling the network element control module as shown in FIG. 5, so as to obtain management information from each network device.

At step 1804: after receiving a reply from each network device, the network element control module sends the obtained result to the processing module (e.g., the first processing module in FIG. 5) corresponding to SNMP.

At step 1805: after collecting replies from all the network devices, the SNMP processing module can plot, for example, using a BFS algorithm, a complete topology between the network devices, i.e., an underlay network topology. The overlay network topology and the underlay network topology are presented as one topology, and the topology merging the overlay network and the underlay network is fed back to the client module.

At step 1806: the client module obtains and outputs network topology information between the network devices.

FIG. 17 shows the output topology obtained according to the example. In this manner, based on the obtained topology, connection and configuration problems between the network devices can be positioned conveniently. The network scenario of the sixth example is different from that of the fifth example.

The above are only the illustrative examples of the present disclosure and not intended to limit the scope of the present disclosure. Any amendments, equivalent substitutions, improvements, etc. within the principle of the disclosure are all included in the protection scope defined by the appended claims of the disclosure.

## Claims

1. A system for obtaining a network topology, comprising: a server as a control node and at least one server as a compute node, wherein
the control node comprises: a first obtaining unit, a client module and a management module, wherein
the first obtaining unit is configured to obtain any one or any combination of the following topology information: topology information of a virtual network inside the server where the first obtaining unit is located, topology information between the server where the first obtaining unit is located and a network device, and topology information between network devices;
the client module is configured to obtain corresponding topology information from the first obtaining unit in the server where the client module is located according to a call from the management module;
the management module is configured to manufacture a network topology according to the obtained topology information, and
the compute node comprises: a second obtaining unit and a client module, wherein
the second obtaining unit is configured to obtain any one or any combination of the following topology information: topology information of a virtual network inside the server where the second obtaining unit is located, and topology information between the server where the second obtaining unit is located and a network device; and
the client module is configured to obtain corresponding topology information from the second obtaining unit in the server where the client module is located according to a call from the control node, and output the topology information to the control node.

2. The system according to claim 1, wherein the client module is further configured to: obtain corresponding topology information from each module for obtaining topology information in the server where the client module is located according to a call from a user.

3. The system according to claim 1, wherein the client module of the control node is further configured to: obtain topology information from the first obtaining unit according to a request from a user so that the user who initiates the request obtains a network topology of the control node.

4. The system according to claim 1, wherein the client module of the compute node is further configured to: obtain topology information from the second obtaining unit of the compute node according to a request from a user so that the user who initiates the request obtains a network topology of the compute node.

5. The system according to claim 1, wherein the control node comprises a primary control node and a backup control node.

6. The system according to any one of claims 1 to 5, wherein
the topology information of the virtual network inside the server comprises: topology information between a virtual machine and a virtual network device inside the server, and topology information between virtual network devices inside the server;
the topology information between the server and the network device comprises: topology information between each network card of a physical server and the network device; and
the topology information between the network devices comprises: topology information between physical network devices.

7. A server, comprising: an obtaining module and a client module, wherein
the obtaining module is configured to obtain topology information of a virtual network inside the server where the obtaining module is located, and/or obtain topology information between the server where the obtaining module is located and a network device; and
the client module is configured to obtain corresponding topology information from the obtaining module according to a call from a management module.

8. The server according to claim 7, wherein the obtaining module comprises a first obtaining module and a second obtaining module, wherein
the first obtaining module is configured to obtain topology information of the virtual network inside the server where the first obtaining module is located; and
the second obtaining module is configured to obtain topology information between the server where the second obtaining module is located and the network device.

9. The server according to claim 8, further comprising: a management module, and the obtaining module further comprises: a third obtaining module, wherein
the third obtaining module is configured to obtain topology information between network devices; and
the management module is configured to manufacture a network topology according to the obtained topology information.

10. The server according to claim 9, wherein the client module is further configured to:
obtain corresponding topology information from the obtaining module according to a request from a user so that the user who initiates the request obtains a network topology of the server.

11. The server according to claim 8, wherein the first obtaining module comprises: a first network card statistical module, a search module, a first generation module and a first message queue module, wherein
the first network card statistical module is configured to collect network card related information of all current physical network cards in the server where the first network card statistical module is located, and provide information for recording a connection relationship between the network cards and ports of a switch;
the search module is configured to search a virtual switch OVS database for description information of a relationship between a bridge and a port; search a virtual network card name in a virtual machine; and call a Neutron API to search a Neutron database for information of a virtual network device;
the first generation module is configured to form a topology of the virtual network inside the server based on information from the search module; and
the first message queue module is configured to implement interprocess communication.

12. The server according to claim 11, wherein the first generation module is configured to: obtain a connection relationship between the virtual machine and an OVS bridge according to the description information and the virtual network card name from the search module, and obtain a connection relationship between the virtual network device and an OVS bridge according to the description information and the information of the virtual network device from the search module.

13. The server according to claim 11, wherein the first obtaining module further comprises:
a first log module configured to record events of the server where the first log module is located;
a first daemon module configured to convert a general process into a daemon process; and
a first format conversion module configured to convert information required to be transmitted from a server side into a designated data format before outputting.

14. The server according to claim 8, wherein the second obtaining module comprises: a second network card statistical module, a multi-thread control module, at least one monitoring module and a second message queue module, wherein
the second network card statistical module is configured to collect network card related information of all current physical network cards in the server where the second network card statistical module is located;
the multi-thread control module is configured to generate and synchronize multiple threads;
each monitoring module is configured to process messages received by each network card respectively; and
the second message queue module is configured to implement interprocess communication.

15. The server according to claim 14, wherein the multi-thread control module is configured to:
start a thread for each network card, which thread is configured to monitor all messages sent to the network card and filter out LLDP and CDP messages; and set a protective synchronization policy for the multiple threads so that critical data structures can be read or written by only one thread at a time.

16. The server according to claim 14, wherein each monitoring module comprises: an MAC layer processing module, an LLDP layer processing module and a CDP layer processing module, wherein
the MAC layer processing module is configured to analyze and process an MAC header;
the LLDP layer processing module is configured to analyze and process an LLDP message header and a TLV field; and
the CDP layer processing module is configured to analyze and process a CDP message header and a TLV field.

17. The server according to claim 16, wherein the LLDP layer processing module calls sockets to process the LLDP message.

18. The server according to claim 9, wherein the third obtaining module comprises: a network element control module, a processing module and a third message queue module, wherein
the network element control module is configured to manage and enable communication with the network device;
the processing module is configured to process data related to SNMP; and process network topology data from an SDN controller; and
the third message queue module is configured to implement interprocess communication.

19. The server according to claim 18, wherein in response to that a network management system is further comprised, the processing module is further configured to: process network topology data from the network management system, and
the network element control module is further configured to: manage and enable communication with the network management system.

20. The server according to claim 16, wherein the third obtaining module further comprises:
a third log module configured to record events of the server where the third log module is located;
a third daemon module configured to convert a general process into a daemon process; and
a third format conversion module configured to convert information required to be transmitted from a server side into a designated data format before outputting.

21. The server according to claim 9, wherein the management module comprises:
a fourth message queue module and a topology information processing module, wherein
the fourth message queue module is configured to implement interprocess communication, call a northbound interface of the client module in the server to obtain topology information from the first, second, and third obtaining modules; and
the topology information processing module is configured to integrate the collected topology information to manufacture a network topology.

22. The server according to claim 21, wherein the management module further comprises: a first northbound interface module configured to be called by a user, and obtain the network topology according to the call by the user.

23. The server according to claim 19, wherein the management module further comprises:
a fourth log module configured to record events of the server where the fourth log module is located;
a fourth daemon module configured to convert a general process into a daemon process; and
a fourth format conversion module configured to convert information required to be transmitted from a server side into a designated data format before outputting.

24. The server according to claim 8, wherein the client module comprises: a fifth message queue module, a second northbound interface module, and an output module, wherein
the fifth message queue module is configured to implement interprocess communication, and monitor data of the server, in which the fifth message queue module is located, in background in a daemon mode;
the second northbound interface module is configured to obtain corresponding topology information from the first obtaining module, and/or the second obtaining module, and/or the third obtaining module according to a call from the management module; and
the output module is configured to output the obtained topology information to a control node or a client initiating the request.

25. The server according to claim 24, wherein the northbound interface module is further configured to: obtain and output corresponding topology information from each module for obtaining topology information in the server where the northbound interface module is located according to a call from a user; or, obtain corresponding topology information from the first obtaining module and/or the second obtaining module of a compute node where the northbound interface module is located, and output the topology information to the control node.

26. A method for obtaining a network topology, comprising:
obtaining topology information of a virtual network inside a server, topology information between the server and a network device, and topology information between network devices; and
manufacturing a network topology according to any one or any combination of the following obtained topology information: topology information of the virtual network inside the server, topology information between the server and the network device, and topology information between the network devices.

27. The method according to claim 26, further comprising: outputting, according to a request from a user, the obtained topology information to a client of the user initiating the request.

28. The method according to claim 26 or 27, wherein
the topology information of the virtual network inside the server comprises: topology information between a virtual machine and a virtual network device inside the server, and topology information between virtual network devices inside the server;
the topology information between the server and the network device comprises: topology information between each network card of a physical server and the network device; and
the topology information between the network devices comprises: topology information between physical network devices.

29. The method according to claim 26 or 27, wherein the obtaining the topology information of the virtual network inside the server comprises:
collecting information of all current physical network cards in the server;
searching an OVS database for description information of a relationship between a bridge and a port, searching a virtual network card name in a virtual machine, and calling a Neutron API to search a Neutron database for information of a virtual network device; and
forming a topology of the virtual network inside the server based on the obtained information.

30. The method according to claim 29, wherein the forming the topology of the virtual network inside the server based on the obtained information comprises:
obtaining a connection relationship between the virtual machine and an OVS bridge according to the description information of the relationship between the bridge and the port and the virtual network card name of the virtual machine; and obtaining a connection relationship between the virtual network device and an OVS bridge according to the description information of the relationship between the bridge and the port and the information of the virtual network device.

31. The method according to claim 26 or 27, wherein the obtaining the topology information between the server and the network device comprises:
collecting network card related information of all current physical network cards in the server;
starting a thread for each network card, which thread is configured to monitor all messages sent to the network card and filter out LLDP and CDP messages; and
processing messages received by each network card respectively.

32. The method according to claim 31, wherein the processing the messages received by each network card comprises:
analyzing and processing an MAC header; analyzing and processing an LLDP message header and a TLV field; and analyzing and processing a CDP message header and a TLV field.

33. The method according to claim 32, wherein the LLDP message is processed by calling sockets.

34. The method according to claim 26 or 27, wherein the obtaining the topology information between the network devices comprises:
processing data related to SNMP, comprising data directly sent from the network device; and
processing network topology data from an SDN controller.

35. A computer readable storage medium with a computer executable instruction stored thereon which, when executed by a processor, causes the method for obtaining the network topology according to any one of claims 26 to 34 to be implemented.

36. An electronic device for obtaining a network topology, comprising a processor and a memory, wherein the memory has stored thereon a computer program operable on the processor, and when executed by the processor, the computer program causes the method for obtaining the network topology according to any one claims 26 to 34 to be implemented.
